# FASCICULE DE BREVET EUROPEEN

(11) **EP 1 673 242 B1**
(45) Date de publication et mention de la délivrance du brevet: **30.11.2011**
(21) Numéro de dépôt: 04791510.3
(22) Date de dépôt: 11.10.2004
(51) Int. Cl.: B60G 11/14, F16F 1/12

(54) **SUSPENSION DE VEHICULE**
FAHRZEUGAUFHÄNGUNGSSYSTEM
VEHICLE SUSPENSION SYSTEM

(30) Priorité: 09.10.2003 FR 0311814
(43) Date de publication de la demande: 28.06.2006
(73) Titulaire: ALLEVARD REJNA AUTOSUSPENSIONS, 92210 Saint-Cloud (FR)
(72) Inventeur: RHEIN, Jacky, F-91330 YERRES (FR)
(74) Mandataire: Barbin le Bourhis, Joël
(86) Numéro de dépôt international: PCT/FR2004/002564
(87) Numéro de publication internationale: WO 2005/035281

(56) Documents cités:
- EP-A- 1 215 059
- GB-A- 313 896
- US-A- 5 375 870
- US-B1- 6 460 835

## Description

L'invention se rapporte à une suspension de véhicule, notamment une suspension à bras tirés et concerne plus particulièrement un perfectionnement d'un ressort d'une telle suspension, permettant de mieux contrôler la compression de celui-ci.

Une telle suspension selon le préambule de la revendication 1 est connue du document GB 313 869 A.

L'invention s'applique à toute suspension où un ressort est installé en appui entre deux supports d'espacement variable et où au moins l'un des supports est assujetti à se déplacer selon une trajectoire courbe par rapport à l'autre. C'est notamment le cas d'une suspension dite "à bras tiré". Par exemple, l'un des supports est solidaire du châssis et l'autre est défini sur un bras articulé à ce même châssis.

Lorsque les angles d'ouverture sont importants (c'est-à-dire lorsque la course de suspension est grande), l'implantation du ressort pose des problèmes techniques non négligeables. Notamment, un ressort à spires monté entre deux supports de ce genre se courbe naturellement entre les deux appuis et les contacts entre les spires terminales du ressort et lesdits supports ne sont pas satisfaisants, parfois ponctuels en position de détente de la suspension (c'est-à-dire roue pendante), ce qui peut entraîner un déboîtement du ressort ou au moins du bruit et des amorces de corrosion. En outre, l'empilage des spires à la compression est irrégulier.

L'invention concerne un perfectionnement permettant à la fois d'améliorer l'accostage du ressort avec les supports et d'assurer un empilage régulier des spires lorsqu'il se comprime.

Plus particulièrement, l'invention concerne une suspension de véhicule comportant un sous-ensemble constitué d'un ressort à spires monté en appui entre deux supports d'espacement variable, caractérisée en ce qu'au moins un support est assujetti à se déplacer selon une trajectoire courbe par rapport à l'autre et en ce que l'évolution du pas d'une partie d'extrémité de la spire terminale correspondante, en appui sur ce support, est négative ou nulle.

Avantageusement, ladite spire terminale est décentrée par rapport à un axe général dudit ressort. La combinaison de ces deux caractéristiques est très avantageuse.

La conformation de cette spire terminale assure un contact plus complet (c'est-à-dire s'étendant sur une longueur de spire plus importante) entre ladite spire terminale et le support correspondant, notamment à faible charge.

L'invention sera mieux comprise et d'autres avantages de celle-ci apparaîtront mieux à la lumière de la description qui va suivre donnée uniquement à titre d'exemple et faite en référence aux dessins annexés, dans lesquels :
- les figures 1 et 2 illustrent une partie de suspension d'un type connu, c'est-à-dire plus particulièrement un ressort classique, monté entre deux supports ;
- la figure 3 est une vue d'un ressort modifié conformément à l'invention ;
- la figure 4 est une vue selon la flèche IV de la figure 3 ; et
- les figures 5 et 6 sont des vues analogues aux figures 1 et 2 et montrent le positionnement et le comportement du ressort modifié conformément à l'invention, entre les deux supports.

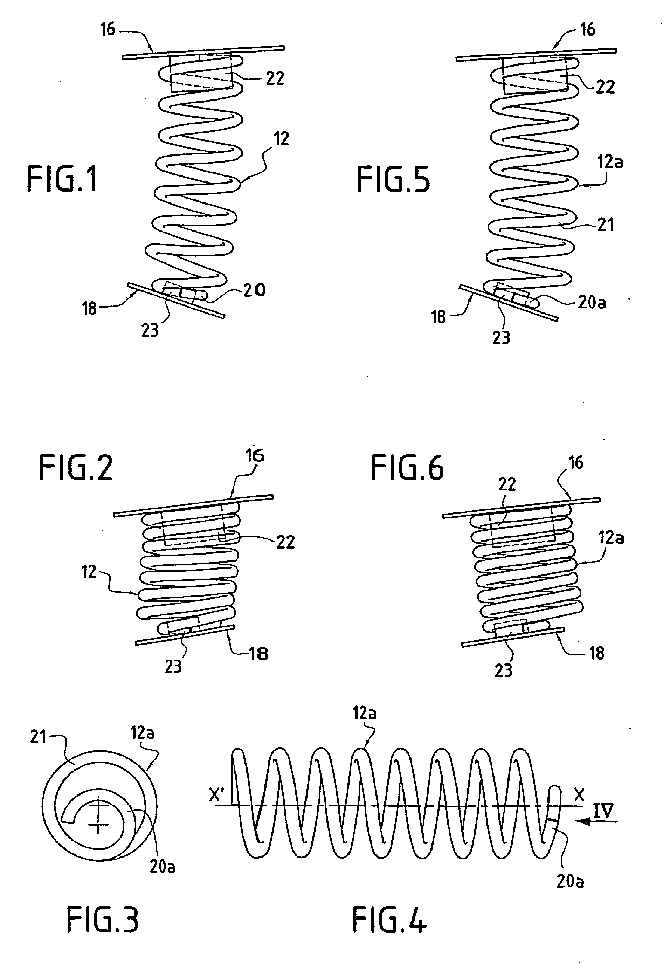

En considérant les figures 1 et 2, la partie de suspension classique représentée comporte un ressort à spires 12 monté en appui de compression entre deux supports 16, 18 d'espacement variable. Le support 16 est solidaire du châssis, tandis que l'autre support 18 est défini par un bras lui-même monté articulé à ce châssis. Les deux supports se déplacent donc "en ciseau" l'un par rapport à l'autre. De plus, les spires du ressort connu sont toutes coaxiales, à l'état non contraint, y compris les spires terminales qui sont destinées à être engagées dans des plots correspondants, solidaires des supports. Il en résulte notamment (figure 1) un mauvais appui entre au moins une spire terminale 20 et son support 18 en position relâchée du ressort et un empilage irrégulier des spires (figure 2) lors de la compression.

Le ressort 12a conforme au perfectionnement de l'invention est représenté à l'état non contraint sur les figures 3 et 4. On voit que l'évolution du pas d'une partie d'extrémité d'au moins une spire terminale 20a est négative. D'autre part, au moins une spire terminale (la spire 20a dans l'exemple) est décentrée par rapport à un axe général X'-X du ressort. De plus, on remarque que, dans l'exemple représenté, ladite spire terminale 20a est de diamètre inférieur à un diamètre moyen d'autres spires voisines dudit ressort. Enfin, cette spire terminale 20a est sensiblement tangente à un cylindre dans lequel s'inscriraient ses autres spires voisines 21 (de diamètre constant) lorsque le ressort est à l'état non contraint, comme représenté sur les figures 3 et 4.

En raison de ces caractéristiques, le montage du ressort 12a entre les deux supports (figures 4 et 5) est beaucoup plus satisfaisant. Chaque support comporte (comme dans l'exemple connu) un plot 22, 23 conformé et dimensionné pour s'ajuster dans la spire terminale correspondante. En revanche (figure 5), l'évolution du pas de la spire terminale 20a permet au ressort de se positionner de façon beaucoup plus satisfaisante entre ses appuis (déterminés par les plots) avec une courbure moindre et plus régulière à l'état relâché tandis que la spire terminale repose sur son support sur une longueur de spire beaucoup plus importante, notamment lorsque le ressort est relâché, comme on le voit en comparant les figures 1 et 5. Par ailleurs, lorsque le ressort est comprimé, l'empilage des spires est beaucoup plus régulier comme le montre la comparaison des figures 2 et 6.

## Revendications

1. Suspension de véhicule comportant un sous-ensemble constitué d'un ressort à spires monté en appui entre deux supports d'espacement variable, au moins un support (18) étant assujetti à se déplacer selon une trajectoire courbe par rapport à l'autre, **caractérisée en ce que** l'évolution du pas d'une partie d'extrémité de la spire terminale (20a) correspondante en appui sur ce support est négative ou nulle.

2. Suspension de véhicule selon la revendication 1, **caractérisée en ce que** ladite spire terminale (20a) est décentrée par rapport à un axe général (X'-X) dudit ressort.

3. Suspension selon la revendication 1 ou 2, **caractérisée en ce que** ladite spire terminale (20a) est de diamètre inférieur à un diamètre moyen d'autres spires (21) voisines dudit ressort.

4. Suspension selon la revendication 3, **caractérisée en ce que** ladite spire terminale (20a) est sensiblement tangente à un cylindre dans lequel s'inscrivent lesdites autres spires voisines, lorsque ledit ressort est à l'état non contraint.

5. Suspension selon la revendication 3 ou 4, **caractérisée en ce que** ledit support (18) avec ledit coopère ladite spire terminale comporte un plot (23) conformé et dimensionné pour s'ajuster dans ladite spire terminale.

## Claims

1. A vehicle suspension including a subassembly constituted by a coil spring mounted to bear between two supports of variable spacing, at least one support (18) being constrained to move along a trajectory that is curved relative to the other, **characterized in that** the variation in the pitch of an end portion of the corresponding end turn (20a) bearing against said support is negative or zero.

2. A vehicle suspension according to claim 1, **characterized in that** said end turn (20a) is off-center relative to a general axis (X'-X) of said spring.

3. A suspension according to claim 1 or claim 2, **characterized in that** said end turn (20a) is of diameter smaller than a mean diameter of other turns (21) of said spring, and adjacent thereto.

4. A suspension according to claim 3, **characterized in that** said end turn (20a) is substantially tangential to a cylinder defined by said adjacent other turns when said spring is in its non-stressed state.

5. A suspension according to claim 3 or claim 4, **characterized in that** said support (18) with which said end turn co-operates includes a stud (23) shaped and dimensioned so as to fit in said end turn.

## Patentansprüche

1. Fahrzeugaufhängung, umfassend eine Untereinheit, welche aus einer Feder mit Windungen besteht, die in Anlage zwischen zwei Trägern mit variablem Abstand angebracht ist, wobei wenigstens einem Träger (18) auferlegt wird, sich gegenüber dem anderen entlang einer gekrümmten Bahn zu bewegen, **dadurch gekennzeichnet, daß** die Entwicklung der Steigung eines Endteils der an diesem Träger in Anlage befindlichen entsprechenden Abschlußwindung (20a) negativ oder null ist.

2. Fahrzeugaufhängung nach Anspruch 1, **dadurch gekennzeichnet, daß** die Abschlußwindung (20a) gegenüber einer Hauptachse (X'-X) der Feder außermittig liegt.

3. Aufhängung nach Anspruch 1 oder 2, **dadurch gekennzeichnet, daß** die Abschlußwindung (20a) einen Durchmesser aufweist, der kleiner als ein mittlerer Durchmesser von anderen benachbarten Windungen (21) der Feder ist.

4. Aufhängung nach Anspruch 3, **dadurch gekennzeichnet, daß** die Abschlußwindung (20a) zu einem Zylinder, in dem die anderen benachbarten Windungen enthalten sind, im wesentlichen tangential ist, wenn die Feder sich im unbelasteten Zustand befindet.

5. Aufhängung nach Anspruch 3 oder 4, **dadurch gekennzeichnet, daß** der Träger (18) mit dem die Abschlußwindung zusammenwirkt, ein Klötzchen (23) umfaßt, das gestaltet und dimensioniert ist, um in die Abschlußwindung zu passen.
